# EUROPEAN PATENT SPECIFICATION

(11) **EP 3 628 174 B1**
(45) Date of publication and mention of the grant of the patent: **05.03.2025**
(21) Application number: 19199661.0
(22) Date of filing: 25.09.2019
(51) Int. Cl.: A23L 3/3418, A23L 3/3481, A23L 3/3508, A23B 4/20, A23L 17/40, A23B 4/005

(54) **METHOD FOR PRESERVING SHRIMP**
VERFAHREN ZUR KONSERVIERUNG VON GARNELEN
PROCÉDÉ DE CONSERVATION DE CREVETTES

(30) Priority: 25.09.2018 SE 1851141
(43) Date of publication of application: 01.04.2020
(73) Proprietor: Icelandic Export Center Ltd., 108 Reykjavik (IS)
(72) Inventor: Ottarsson, Yngvi, 108 Reykjavik (IS)
(74) Representative: AWA Sweden AB

(56) References cited:
- EP-A1- 2 353 397
- CA-A- 814 944
- CN-A- 103 535 781
- US-A1- 2015 196 040
- L S BAK ET AL: "Effect of modified atmosphere packaging on oxidative changes in frozen stored cold water shrimp (Pandalus borealis)", FOOD CHEMISTRY, vol. 64, no. 2, 1 February 1999 (1999-02-01), pages 169 - 175, XP055431672, DOI: 10.1016/S0308-8146(98)00152-6

## Description

### Field of the invention

The present invention generally relates to a method for producing a packaged shrimp product. More particularly, the invention is directed to a method for preserving and packaging shrimp in order to extend the shelf life of the product and at the same time maintain a high quality product in the sense of taste, smell and texture of the shrimp.

### Background of the invention

Fresh seafood is popular in many areas of the world and shrimp is a one example of a seafood product that is highly sought-after.

Shrimp is often cooked already onboard the fishing boat shortly after being caught and then delivered cooled, but not frozen, to stores and end customers some hours later and referred to as fresh shrimp. As such, fresh shrimp is considered a delicacy with superior taste, smell, texture, and appearance compared to shrimp that, for example, has been frozen before delivery to stores and to end customers.

Due to the short shelf life of fresh shrimp, this seafood product is primarily accessible in coastal areas where shrimp fishing is performed or in other geographical areas with well-developed food transportation systems and a large customer base reflecting high demand.

Several methods for increasing the shelf life of shrimp-based products, are known in the art, such as packaging and storing the shrimp submerged in a liquid with a preserving effect, a so called brine or preserving solution. Such a preserving solution typically contains water, salt and at least one preservative substance (such as sodium benzoate).

While this method successfully extends the shelf life of the shrimp-based product there are several drawbacks which limits its usefulness, especially when the shrimp to be preserved is unpeeled shrimp, also known as shell-on shrimp. Packaging and storing shell-on shrimp together with a preserving solution over an extended period of time, results in softening and discoloring of the shell of the shrimp which leads to the shrimp losing the appearance and texture of fresh shrimp.

Another disadvantage with this method is that a large part of the weight and volume of the packages to be transported and delivered to the store or end customer consists of preserving solution. The preserving solution is not the desired product and is simply discarded by the end user of the product and, thus, a large part of the transportation cost is related to an undesired portion of the product. This undesired portion of the product also has negative environmental implications, related to for example the increased transportation weight and the fact that the preserving solution is simply discarded as waste by the end user.

Another method to extend the shelf like of a shrimp-based product is to store the shrimp in a frozen state with subsequent thawing of the shrimp prior to use and consumption. This method successfully extends the time during which the shrimp can be stored, but the thawed shrimp is not experienced as fresh shrimp in the sense of smell, taste and texture. In addition, the risk of mechanical damage to the shell of unpeeled and frozen shrimp is high, which may result in a product with lower experienced quality.

There are other methods related to preserving, or otherwise processing, shrimp to produce shrimp-based products intended for various uses. Depending on the intended use of the shrimp-based product, specific features, or properties, of the shrimp are desirable. The desired features of the shrimp-based end product are reflected in characteristics of the chosen production method.

CN103535781B discloses a method for preserving and packaging a shrimp-based product, wherein the shell of the shrimp is intentionally softened in a step of treating the shrimp with certain enzymes. The shrimp-based product is then packed under vacuum and pasteurized.

Sae-leaw, et al., (Food Control 84(2018) 75-82) discloses a method for retardation of melanosis of Pacific white shrimp using epigallocatechin gallate (EGCG). In this method raw shrimp are soaked in EGCG solution, while being subjected to ultrasound in up to 15 minutes, cooked and then soaked in EGCG solution a second time, while being subjected to ultrasound in up to 15 minutes.

NL2002566C discloses a method for preserving peeled North Sea shrimp, wherein the use of benzoic acid and sorbic acid (and derivatives thereof) as preservative substances is avoided.

Dalgaard and Jørgensen (International Journal of Food Science and Technology 35(2000) 431-442) disclose a method wherein shrimp are cooked, peeled, frozen, thawed in a microwave oven, brined, drained and packed under a modified atmosphere.

CN101904543A discloses a method of prolonging the shelf life of raw shrimp, wherein the raw shrimp are immersed in 4-hexylresorcinol solution to prevent blackening of the shell, sterilized using ozone and packed under a controlled atmosphere.

CN101991177 also discloses a method for prolonging the shelf life of raw shrimp by the use different agents, such as 4-hexylresorcinol, that prevent blackening of the shell.

WO2019039939A1 discloses a method of preserving peeled brown shrimp immersed in a preservative solution, wherein the use of benzoic acid and sorbic acid (and derivatives thereof) is avoided.

CA814944 discloses a method for preserving shell-on shrimps comprising lightly boiling the shrimps, adding preserving liquid, which is removed such that a slight layer of liquid is maintained around the shrimps, packaging in a container and heat treating.

Thus, there is still a need in the field for improved methods of preserving and packaging cooked shell-on shrimp in such a way as to permit extended shelf life of the cooked shell-on shrimp and simultaneously maintaining the appearance of the product as being fresh shrimp.

### Summary of the invention

It is an object of the present invention to at least partly overcome drawbacks of the prior art. This and other objects, which will become apparent in the following, are accomplished by a method as defined in the accompanying claims.

In particular, it is an object of the invention to provide a cooked shell-on shrimp product with extended shelf life compared to fresh shrimp while maintaining the appearance of fresh shrimp regarding smell, taste and texture.

A further object of the invention is to provide a shrimp product with low weight and volume to make transportation and handling of the product easy and cost-efficient.

This is achieved by a method for preserving and packaging shell-on shrimp comprising the steps of providing pre-cooked shrimp, wherein the pre-cooked shrimp is shell-on shrimp, wherein the pre-cooked shrimp is *Pandalus spp.,* and wherein the pre-cooked shrimp has not been previously frozen, contacting the pre-cooked shrimp with a preserving solution, wherein the preserving solution is an aqueous solution or a liquid comprising at least one preservative substance, pre-storing the pre-cooked shrimp in the preserving solution for a time period of 30 minutes to two weeks, separating the pre-cooked shrimp from substantially all of the preserving solution, and packaging the separated pre-cooked shrimp under a modified atmosphere, wherein the modified atmosphere is substantially free of oxygen, thereby providing said preserved and packed shell-on shrimp, wherein said packaging does not comprise a step of heating the packaged shell-on shrimp, and wherein the preserved and packaged shell-on shrimp maintains the texture and appearance of fresh shrimp.

As used herein, the term "pre-cooked shrimp" refers to shrimp that has been prepared for consumption by means of heating the shrimp. As a non-limiting example, the shrimp is cooked by heating the shrimp in water or an aqueous solution such as brine which is either boiling or held at a temperature just below boiling, until the shrimp is cooked. Other ways of heating shrimp to produce pre-cooked shrimp include the use of steam or microwaves.

Further, the pre-cooked shrimp is shell-on shrimp. As such, the shrimp has shell that is essentially intact and that has not been intentionally removed. Therefore, the inventive method is especially advantageous in that prolonged storage of pre-cooked shrimp immersed by a preserving solution may be avoided and, thus, discoloring and/or softening of the shell of the shrimp may be avoided. As such, the packaged pre-cooked shrimp resulting from the inventive method maintains the texture and appearance of fresh shrimp.

As used herein, the step of contacting the pre-cooked shrimp with a preserving solution refers to adding the pre-cooked shrimp to a preserving solution, or vice versa, adding a preserving solution to pre-cooked shrimp, with the result of the pre-cooked shrimp being at least partly immersed by the preserving solution.

As used herein, the term "preserving solution" refers to an aqueous solution or a liquid, such as a brine, comprising at least one preservative substance known in the field of food preservation. As a non-limiting example, the preserving solution, or brine, comprises water, salt, such as sodium chloride, and at least one preservative substance.

As used herein, the term "separation" refers to the step of removing substantially all of the preserving solution from the pre-cooked shrimp, or vice versa, removing the pre-cooked shrimp from substantially all of the preserving solution. As used herein, the term "substantially all of the preserving solution" refers to the portion of preserving solution that is not absorbed by the meat and cavities of the shrimp and the portion of the preserving solution that is not adsorbed to the surface of the shrimp. As such, substantially all of the preserving solution may be removed from the pre-cooked shrimp in a separation step for example by means of sieving.

The invention is based on the realization by the inventors that the preservation of fresh shrimp can be achieved by immersing fresh shrimp by a preserving solution for a limited time only. This time being long enough for the shrimp to absorb an effective amount of the preserving solution into the meat and cavities of the shrimp but short enough to avoid any negative effects that the preserving solution may cause on the shrimp upon long-term contact, such as softening and/or discoloring of the shell.

As used herein, the term "fresh shrimp" refers to cooked shrimp that has not been previously frozen and that has been cooked shortly after being caught. As an example, freshly caught (raw) shrimp is cooked within a few hours, such as within three hours, such as within two hours, such as within one hour after being caught and then cooled but not frozen.

As used herein, the term "effective amount" refers to the amount of preserving solution that is enough for the preservation to be effective, with extended shelf life as a result, without the need for the shrimp being continuously submerged by the preserving solution during storage.

By use of the inventive method, the pre-cooked shrimp may absorb the preserving solution into the meat and available cavities such that, after the separating step, an effective amount of the preserving solution is kept absorbed by the body of the shrimp, thus avoiding the negative effects of prolonged storage of shrimp immersed by a preserving solution.

The inventive method is advantageous in that only preserving solution absorbed by the shrimp is needed to accomplish an extended shelf life of the packaged product and the presence of non-absorbed i.e. superfluous preserving solution in the package may be avoided. This results in a packaged shrimp product with low weight and low volume, compared to a packaged shrimp product immersed by preserving solution, thus making transportation and handling of the product easier and more cost-efficient.

Further, the inventive method allows for the preservation of shell-on shrimp resulting in a preserved shrimp product with extended shelf life compared to fresh shrimp and with a maintained high quality of the shell of the shrimp which results in a product with maintained texture and appearance of fresh shrimp.

The pre-cooked shrimp is *Pandalus spp.* In embodiments of the inventive method, the pre-cooked shrimp is *Pandalus borealis.*

In embodiments of the inventive method, the step of providing the pre-cooked shrimp comprises the steps of cooking freshly caught shrimp to produce pre-cooked shrimp. The pre-cooked shrimp is cooled to a temperature where the pre-cooked shrimp are kept in a non-frozen state, thus the pre-cooked shrimp may be fresh shrimp.

The freshly caught shrimp are cooked before the quality of the shrimp has decreased. It is possible to keep the shrimp for a few days before they are cooked. In embodiments of the inventive method, the step of cooking freshly caught shrimp is performed within twelve hours, such as within six hours, such as within three hours, such as within two hours, such as within one hour, such as within 30 minutes after the shrimp have been caught. In embodiments of the inventive method, there is no step of preserving the freshly caught shrimp prior to the step of cooking the freshly caught shrimp.

In embodiments of the inventive method, the contacting step is performed within a time period of seven days from the step of cooking the freshly caught shrimp, such as within five days, such as within three days, such as within one day, in order to maintain a high quality of the pre-cooked shrimp in the sense of smell, taste and texture. The inventive method thus allows the shelf life of pre-cooked shrimp to be extended without the need to store the shrimp in a frozen state which results in a shrimp-product with maintained appearance of fresh shrimp in the sense of smell, taste and texture. In addition, the risk of mechanical damage to the shrimp, particularly shell-on shrimp, associated with packaging of frozen shrimp is decreased.

In embodiments of the inventive method, the preserving solution comprises at least one preservative substance selected from citric acid, sodium benzoate and potassium sorbate.

In embodiments of the inventive method, the preserving solution comprises at least one preservative substance selected from lactic acid, ascorbic acid, malic acid and a sodium salt of citric acid.

These preservative substances are known examples of preservative substances in the field of food preservation. As such, these substances are known to give a preserving effect to food products and thus extend the shelf life of the food product in question.

In embodiments of the inventive method, the preserving solution comprises lactic acid or derivatives thereof that may be declared as natural aroma.

The preserving solution, or brine, may have an acid concentration low enough so as to not soften the shell of the shrimp to any significant degree. As an example, a typical brine may comprise citric acid in a concentration of about 10-15 g per kilogram of brine. The total amount of preservative substances, for example a combined total amount of sodium benzoate and potassium sorbate, may also be varied in the brine. As such, by use of the inventive method the total amount of preservative substances absorbed by the shrimp may be enough to achieve a preserving effect while keeping the quality of the shell intact, while also being in accordance with, for example, EU legislation. As an example, the brine may comprise sodium benzoate and potassium sorbate in a combined total amount of about 4 g per kilogram of brine. Thus, as an example, the inventive method may provide preserved and packed shell-on shrimp, wherein the combined total amount of sodium benzoate and potassium sorbate in the shrimp does not exceed 2 g per kilogram of preserved pre-cooked shrimp.

In embodiments of the inventive method, the preserving solution comprises monosodium glutamate. Monosodium glutamate is a common flavoring agent known in the field.

By use of the inventive method, the preserving solution may comprise preservative substances as well as flavoring agents, for example natural aromas, resulting in a food product with high quality in regard to shelf life as well as the taste, smell and texture.

In embodiments of the inventive method, the pre-storing step comprises tumbling the pre-cooked shrimp in the preserving solution.

In embodiments of the inventive method, the pre-storing step comprises varying the surrounding pressure in cycles, such as decreasing the pressure below ambient pressure and then increasing the pressure to ambient pressure. Such a cycle may comprise decreasing the surrounding pressure, by drawing vacuum, and maintaining the lowered pressure for a time period such as for 30 seconds, such as for one minute, such as for three minutes, and then increasing the surrounding pressure back to ambient pressure. The cycle may be repeated after a time period at ambient pressure, such as after 30 seconds, such as after one minute, such as after three minutes.

By tumbling the re-cooked shrimp or varying the surrounding pressure in cycles, as described above, the speed at which the preserving solution is absorbed by the pre-cooked shrimp may be increased. As a result, the time needed for the pre-storing step to be effective may be reduced thus resulting in increased time- and, hence, cost-efficiency.

In embodiments of the inventive method, when tumbling the pre-cooked shrimp or varying the surrounding pressure in cycles, as described above, the pre-cooked shrimp is only partially immersed by the preserving solution during the pre-storing step. As such, the pre-cooked shrimp may be only partially submerged in preserving solution, or brine, i.e. not all of the shrimp needs to be kept under the surface of the preserving solution during the pre-storing step. By use of the inventive method, less preserving solution per kilogram of pre-cooked shrimp may be needed in the pre-storing step, with beneficial economic and environmental consequences in that less preserving solution needs to be prepared and less preserving solution needs to be discarded when the pre-storing step has been performed.

In embodiments of the inventive method, the pre-cooked shrimp is fully immersed by the preserving solution during the pre-storing step.

In embodiments of the inventive method, the pre-storing step is performed for a time period of 12 hours to seven days, preferably for 12 hours to four days, most preferably for two to three days.

In embodiments of the inventive method, the separating step comprises sieving off the preserving solution. The pre-cooked shrimp is thus separated from substantially all of the preserving solution that has not been absorbed by the shrimp in the re-storing step. As a result, only a small amount of preserving solution that is not absorbed by the shrimp may be present after the separation step, such as at most 130 ml, such as at most 100 ml, such as at most 70 ml preserving solution per kilogram of pre-cooked shrimp.

In embodiments of the inventive method, the separating step is performed for a time period of two hours to one day, such as for four to 16 hours, such as for six to ten hours.

In embodiments of the inventive method, the packaging step comprises the steps of placing the pre-cooked shrimp in a package, wherein the package is made of gas tight material, replacing the air in the package with a gas mixture for food preservation, wherein the gas mixture is substantially free of oxygen, and sealing the package.

By using a gas mixture for food preservation, known as a modified atmosphere, it is possible to slow down the product aging process that results in for example color loss and deteriorated taste and smell.

In embodiments of the inventive method, the packaging step comprises adding an absorbent in the package, to absorb any superfluous preserving solution that may have been retained with the pre-cooked shrimp after the separation step. As a non-limiting example, the absorbent may be an absorbent pad known in the field.

In embodiments of the inventive method, the packaging step comprises addition of an amount of preserving solution to the package prior to sealing, the amount not exceeding 130 ml preserving solution per kilogram of pre-cooked shrimp in the package.

In embodiments of the inventive method, the packaging step comprises no addition of preserving solution to the package prior to sealing.

In embodiments of the inventive method, the pre-storing step, the separating step and the packaging step are performed sequentially without additional step(s) between the pre-storing and the separating steps or between the separating and the packaging strep

In embodiments of the inventive method, the packaging step is performed within three days, such as within two days, such as within one day, such as within 12 hours, such as within 6 hours after the separating step.

In embodiments, the inventive method comprises a single step of contacting and pre-storing the shell-on shrimp in a preserving solution. Thus, the total time in a preserving solution may be for a time period not exceeding three weeks, such as for a time period of 30 minutes to two weeks, such as for 12 hours to seven days, such as for 12 hours to four days, such as for two to three days.

The inventive method does not comprise a step of heating the packaged shell-on shrimp after the step of packaging the separated pre-cooked shrimp.

In embodiments, the inventive method does not comprise a step of treating freshly caught shrimp or pre-cooked shrimp with ozone.

In embodiments, the inventive method does not comprise a step of treating freshly caught shrimp or pre-cooked shrimp with gamma irradiation.

Further, the method may be free of any additional step of contacting the shell-on shrimp with an enzyme solution to soften the shell of the shrimp

In embodiments, the inventive method consists of the steps of providing pre-cooked shrimp, wherein the pre-cooked shrimp is shell-on shrimp and wherein the pre-cooked shrimp is *Pandalus spp.,* contacting the pre-cooked shrimp with a preserving solution, which is an aqueous solution or liquid comprising at least one preservative substance, pre-storing the pre-cooked shrimp in the preserving solution for a period of time of 30 minutes to two weeks separating the pre-cooked shrimp from substantially all of the preserving solution, and packaging the separated pre-cooked shrimp under a modified atmosphere, wherein the modified atmosphere is substantially free of oxygen, thereby providing said preserved and packed shell-on shrimp, wherein said packaging does not comprise a step of heating the packaged shell-on shrimp, and wherein the preserved and packaged shell-on shrimp maintains the texture and appearance of fresh shrimp.

Thus, the inventive method allows for the preservation of fresh shrimp resulting in a preserved shrimp product with extended shelf life compared to fresh shrimp and with a maintained appearance of fresh shrimp in the sense of taste, smell and texture of the shrimp.

Still other objectives, features, aspects, and advantages of the invention will appear from the following detailed description as well as from the drawings.

### Brief description of the drawings

The above, as well as additional objects, features and advantages of the present inventive concept, will be better understood through the following illustrative and non-limiting detailed description, with reference to the appended drawings, in which:
Fig. 1 schematically illustrates a method according to embodiments of the invention for preserving and packaging shrimp.
Fig. 2 schematically illustrates a method according to embodiments of the invention for preserving and packaging shrimp.

### Detailed description of the invention

Embodiments of the present invention will now be described more fully hereinafter with reference to the accompanying drawings, in which some, but not all, embodiments of the invention are shown. The invention may be embodied in many different forms and should not be construed as limited to the embodiments set forth herein.

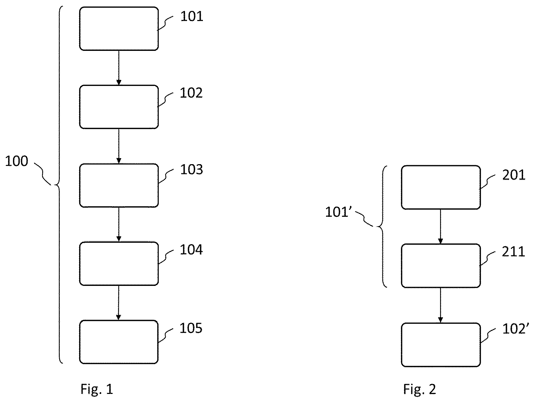

Fig. 1 illustrates a general outline of a method 100 for preserving and packaging shell-on shrimp according to embodiments of the invention. In a certain embodiment of inventive method 100, as shown in Fig. 1, pre-cooked shrimp is provided in a providing step 101. The pre-cooked shrimp is shell-on shrimp and the shrimp is *Pandalus spp.* which previously has not been frozen. The pre-cooked shrimp is brought into contact with a preserving solution in a contacting step 102, by adding the pre-cooked shrimp to the solution with the result of the pre-cooked shrimp being immersed by it. The preserving solution is a brine, which comprises preservative substances suitable for food preservation such as citric acid, sodium benzoate and potassium sorbate. The total amount of preservative substances may be varied, and in this particular example the brine comprises sodium benzoate and potassium sorbate in a combined total amount of about 4 g per kilogram of brine.

Next, the pre-cooked shrimp is stored in the brine in a pre-storing step 103 for a time period of 30 minutes to two weeks.

The duration of the pre-storing step can vary substantially and in this particular example, the shrimp is pre-stored for three days even if a slightly shorter time is considered long enough for the shrimp to absorb an effective amount of the preserving brine. During this time, the shrimp has absorbed the preserving brine in the meat and available cavities and this absorbed amount of the preserving brine exerts the preserving effect to the shrimp. To avoid quality loss of the shrimp, the brine may have an acid concentration low enough so as to not soften the shell of the shrimp to any significant degree. In this particular example, the brine comprises citric acid in a concentration of about 10-15 g per kilogram of brine.

Then, the pre-cooked shrimp is removed from the brine in a separating step 104. This step 104 is preferably achieved by sieving and the excess brine is allowed to drain off the shrimp. In some instances, the use of shakers or fans can make the drainage of the brine more efficient. As a result, the pre-cooked shrimp is separated from essentially all of the preserving brine that has not been absorbed by the shrimp in the pre-storing step 103.

Then, in a packaging step 105, the separated pre-cooked shrimp is placed in a package manufactured in a material suitable for food contact. There are many different kinds of packages that may be used for this purpose, and non-limiting examples include plastic bags or packages with a plastic bottom case. In one particular example, the separated pre-cooked shrimp is placed in a package with a plastic bottom case. The air in the package is then replaced by a gas mixture suitable for food preservation and the package is sealed by thermally welding a plastic film on top of the plastic bottom case. As a result, the shelf life of the packaged shrimp product is further extended as compared to the situation in which the shrimp product is packed under a normal atmosphere. In addition, by use of this package the risk of mechanical damage to the shrimp is decreased in that the shrimp is not pushed together in a compressed package. Thus, the inventive method allows for the preservation of fresh shell-on shrimp resulting in a preserved shrimp product with extended shelf life compared to fresh shrimp and with a maintained appearance of fresh shell-on shrimp in the sense of taste, smell and texture of the shrimp. As such, the inventive method produces a shell-on shrimp product with extended shelf life, while avoiding softening and/or discoloring of the shell.

In one embodiment of the inventive method, the pre-cooked shrimp is only partially immersed by the brine in the contacting step 102. Then, the pre-storing step 103 involves tumbling the shrimp in the brine to speed up the absorption process. By doing this, the time needed for the pre-storing step to be efficient is reduced and the shrimp are separated from the brine after about one day.

Another way to speed up the absorption process in the pre-storing step 103, representing an alternative embodiment of the inventive method, is to vary the surrounding pressure. In this example, the surrounding pressure is decreased relative to ambient pressure, by drawing vacuum, and then increased back to ambient pressure. This procedure is repeated in cycles, such as decreasing the pressure for 30 seconds to 3 minutes, followed by keeping the pressure at ambient pressure for 30 seconds to 3 minutes. These pressure cycles make the brine penetrate the shrimp meat faster and the time needed for the pre-storing step 104 to be efficient is reduced. In this example, the shrimp are separated from the brine after about one day.

A particular embodiment of the inventive method is illustrated in Fig. 2. In this embodiment, the pre-cooked shrimp in the providing step 101' is fresh shrimp. In this particular example, freshly caught (raw) shrimp is cooked, 201, onboard the boat shortly after being caught, such as within three hours, such as within one hour, such as within 30 minutes after being caught. The cooked shrimp is then cooled but not frozen, 211, thus producing fresh shrimp. Since fresh shrimp has a relatively short shelf life, even when cooled, the fresh shrimp is brought in contact with the preserving brine in the contacting step 102' before the quality of the fresh shrimp has decreased. In this particular embodiment, the contacting step 102' is performed within 24 hours of producing the fresh shrimp, but it is possible to wait for a few days, preferably less than seven days, more preferably less than three days, before immersing the fresh shrimp by the brine in the contacting step 102'.

From the description above follows that, although various embodiments of the invention have been described and shown, the invention is not restricted thereto, but may also be embodied in other ways within the scope of the subject-matter defined in the following claims.

## Claims

1. Method for preserving and packaging shell-on shrimp, comprising the steps of:
- providing pre-cooked shrimp, wherein the pre-cooked shrimp is shell-on shrimp, wherein the pre-cooked shrimp is *Pandalus spp.,* and wherein the pre-cooked shrimp has not previously been frozen;
- contacting the pre-cooked shrimp with a preserving solution, wherein the preserving solution is an aqueous solution or a liquid comprising at least one preservative substance;
- pre-storing the pre-cooked shrimp in the preserving solution for a time period of 30 minutes to two weeks;
- separating the pre-cooked shrimp from substantially all of the preserving solution; and
- packaging the separated pre-cooked shrimp under a modified atmosphere, wherein the modified atmosphere is substantially free of oxygen, thereby providing said preserved and packed shell-on shrimp, wherein said packaging does not comprise a step of heating the packaged shell-on shrimp, and
wherein the preserved and packaged shell-on shrimp maintains the texture and appearance of fresh shrimp.

2. The method of claim 1, wherein the step of providing the pre-cooked shrimp comprises the steps of:
- cooking freshly caught shrimp to produce pre-cooked shrimp;
- cooling the pre-cooked shrimp to a temperature where the pre-cooked shrimp are kept in a non-frozen state.

3. The method of claim 2, wherein the contacting step is performed within a time period of seven days from the step of cooking the freshly caught shrimp.

4. The method of any one of the preceding claims, wherein the preserving solution comprises at least one preservative substance selected from citric acid, sodium benzoate and potassium sorbate.

5. The method of claim 4, wherein the preserving solution comprises at least one preservative substance selected from lactic acid, ascorbic acid, malic acid and a sodium salt of citric acid.

6. The method of any one of the preceding claims, wherein the pre-storing step comprises tumbling the pre-cooked shrimp in the preserving solution.

7. The method of any one of the preceding claims, wherein the pre-storing step comprises varying the surrounding pressure in cycles, such as decreasing the pressure below ambient pressure and then increasing the pressure to ambient pressure.

8. The method of any one of claims 6 to 7, wherein the pre-cooked shrimp is only partially immersed by the preserving solution during the pre-storing step.

9. The method of any one of claims 1 to 7, wherein the pre-cooked shrimp is fully immersed by the preserving solution during the pre-storing step.

10. The method of any one of the preceding claims, wherein the pre-storing step is performed for a time period of 12 hours to seven days, preferably for 12 hours to four days, most preferably for two to three days.

11. The method of any one of the preceding claims, wherein the separating step comprises sieving off the preserving solution.

12. The method of any one of the preceding claims, wherein the packaging step comprises the steps of:
- placing the pre-cooked shrimp in a package, wherein the package is made of gas tight material;
- replacing the air in the package with a gas mixture for food preservation, wherein the gas mixture is substantially free of oxygen;
- sealing the package.

13. The method of any of the preceding claims, wherein the packaging step comprises adding an absorbent in the package.

## Patentansprüche

1. Verfahren zum Konservieren und Verpacken von Garnelen mit Schale, umfassend die Schritte:
- Bereitstellen von vorgekochten Garnelen, wobei die vorgekochten Garnelen Garnelen mit Schale sind, wobei die vorgekochten Garnelen *Pandalus spp.* sind und wobei die vorgekochten Garnelen nicht zuvor gefroren worden sind;
- Inkontaktbringen der vorgekochten Garnelen mit einer Konservierungslösung, wobei die Konservierungslösung eine wässrige Lösung oder eine Flüssigkeit ist, die wenigstens einen Konservierungsstoff umfasst;
- Vorlagern der vorgekochten Garnelen in der Konservierungslösung für einen Zeitraum von 30 Minuten bis zwei Wochen;
- Trennen der vorgekochten Garnelen von im Wesentlichen der gesamten Konservierungslösung; und
- Verpacken der abgetrennten vorgekochten Garnelen unter einer modifizierten Atmosphäre, wobei die modifizierte Atmosphäre im Wesentlichen frei von Sauerstoff ist, um die konservierten und verpackten Garnelen mit Schale bereitzustellen, wobei das Verpacken keinen Schritt des Erhitzens der verpackten Garnelen mit Schale umfasst, und
wobei die konservierten und verpackten Garnelen mit Schale die Textur und das Aussehen von frischen Garnelen behalten.

2. Verfahren nach Anspruch 1, wobei der Schritt des Bereitstellens der vorgekochten Garnelen die Schritte umfasst:
- Kochen von frisch gefangenen Garnelen, um vorgekochte Garnelen herzustellen;
- Kühlen der vorgekochten Garnelen auf eine Temperatur, bei der die vorgekochten Garnelen in einem nichtgefrorenen Zustand gehalten werden.

3. Verfahren nach Anspruch 2, wobei der Schritt des Inkontaktbringens innerhalb eines Zeitraums von sieben Tagen ab dem Schritt des Kochens der frisch gefangenen Garnelen durchgeführt wird.

4. Verfahren nach einem der vorstehenden Ansprüche, wobei die Konservierungslösung wenigstens einen Konservierungsstoff ausgewählt aus Citronensäure, Natriumbenzoat und Kaliumsorbat umfasst.

5. Verfahren nach Anspruch 4, wobei die Konservierungslösung wenigstens einen Konservierungsstoff ausgewählt aus Milchsäure, Ascorbinsäure, Apfelsäure und einem Natriumsalz von Citronensäure umfasst.

6. Verfahren nach einem der vorstehenden Ansprüche, wobei der Schritt des Vorlagerns Trommelbehandlung der vorgekochten Garnelen in der Konservierungslösung umfasst.

7. Verfahren nach einem der vorstehenden Ansprüche, wobei der Schritt des Vorlagerns Variieren des Umgebungsdrucks in Zyklen umfasst, wie z.B. Senken des Drucks auf unter Umgebungsdruck und dann Erhöhen des Drucks auf Umgebungsdruck.

8. Verfahren nach einem der Ansprüche 6 bis **7,** wobei die vorgekochten Garnelen während des Schritts des Vorlagerns nur teilweise in die Konservierungslösung eingetaucht sind.

9. Verfahren nach einem der Ansprüche 1 bis 7, wobei die vorgekochten Garnelen während des Schritts des Vorlagerns vollständig in der Konservierungslösung eingetaucht sind.

10. Verfahren nach einem der vorstehenden Ansprüche, wobei der Schritt des Vorlagerns für einen Zeitraum von 12 Stunden bis sieben Tage, vorzugsweise für 12 Stunden bis vier Tage, höchst bevorzugt für zwei bis drei Tage, durchgeführt wird.

11. Verfahren nach einem der vorstehenden Ansprüche, wobei der Trennschritt Absieben der Konservierungslösung umfasst.

12. Verfahren nach einem der vorstehenden Ansprüche, wobei der Schritt des Verpackens die Schritte umfasst:
- Anordnen der vorgekochten Garnelen in einer Verpackung, wobei die Verpackung aus gasdichtem Material besteht;
- Ersetzen der Luft in der Verpackung durch ein Gasgemisch zur Lebensmittelkonservierung, wobei das Gasgemisch im Wesentlichen frei von Sauerstoff ist;
- Verschließen der Verpackung.

13. Verfahren nach einem der vorstehenden Ansprüche, wobei der Schritt des Verpackens Zugeben eines Absorptionsmittels in der Verpackung umfasst.

## Revendications

1. Procédé de conservation et d'emballage de crevettes non décortiquées, comprenant les étapes suivantes :
- obtention de crevettes précuites, les crevettes précuites étant des crevettes non décortiquées, les crevettes précuites étant *Pandalus spp.,* et les crevettes précuites n'ayant pas été préalablement congelées ;
- mise en contact des crevettes précuites avec une solution de conservation, la solution de conservation étant une solution aqueuse ou un liquide comprenant au moins une substance conservatrice ;
- préstockage des crevettes précuites dans la solution de conservation pendant une durée de 30 minutes à deux semaines ;
- séparation des crevettes précuites de la quasi-totalité de la solution de conservation ; et
- emballage des crevettes précuites séparées sous une atmosphère modifiée, l'atmosphère modifiée étant sensiblement dépourvue d'oxygène, pour obtenir ainsi lesdites crevettes non décortiquées conservées et emballées, ledit emballage ne comprenant pas d'étape de chauffage des crevettes non décortiquées emballées, et
dans lequel les crevettes non décortiquées conservées et emballées conservent la texture et l'apparence de crevettes fraîches.

2. Procédé selon la revendication 1, dans lequel l'étape d'obtention des crevettes précuites comprend les étapes suivantes :
- cuisson de crevettes fraîchement pêchées pour produire des crevettes précuites ;
- refroidissement des crevettes précuites jusqu'à une température à laquelle les crevettes précuites sont maintenues dans un état non congelé.

3. Procédé selon la revendication 2, dans lequel l'étape de mise en contact est effectuée dans un laps de temps de sept jours à compter de l'étape de cuisson des crevettes fraîchement pêchées.

4. Procédé selon l'une quelconque des revendications précédentes, dans lequel la solution de conservation comprend au moins une substance conservatrice choisie parmi l'acide citrique, le benzoate de sodium et le sorbate de potassium.

5. Procédé selon la revendication 4, dans lequel la solution de conservation comprend au moins une substance conservatrice choisie parmi l'acide lactique, l'acide ascorbique, l'acide malique et un sel sodique d'acide citrique.

6. Procédé selon l'une quelconque des revendications précédentes, dans lequel l'étape de préstockage comprend le malaxage des crevettes précuites dans la solution de conservation.

7. Procédé selon l'une quelconque des revendications précédentes, dans lequel l'étape de préstockage comprend la variation de la pression environnante par cycles, comme la diminution de la pression en dessous de la pression ambiante, puis l'augmentation de la pression jusqu'à la pression ambiante.

8. Procédé selon l'une quelconque des revendications 6 à 7, dans lequel les crevettes précuites ne sont que partiellement immergées dans la solution de conservation pendant l'étape de préstockage.

9. Procédé selon l'une quelconque des revendications 1 à 7, dans lequel les crevettes précuites sont entièrement immergées dans la solution de conservation pendant l'étape de préstockage.

10. Procédé selon l'une quelconque des revendications précédentes, dans lequel l'étape de préstockage est effectuée pendant une durée de 12 heures à sept jours, de préférence de 12 heures à quatre jours, idéalement pendant deux à trois jours.

11. Procédé selon l'une quelconque des revendications précédentes, dans lequel l'étape de séparation comprend l'élimination par tamisage de la solution de conservation.

12. Procédé selon l'une quelconque des revendications précédentes, dans lequel l'étape d'emballage comprend les étapes suivantes :
- disposition des crevettes précuites dans un emballage, l'emballage étant constitué d'un matériau étanche aux gaz ;
- remplacement de l'air dans l'emballage par un mélange gazeux destiné à la conservation des aliments, le mélange gazeux étant sensiblement dépourvu d'oxygène ;
- scellement de l'emballage.

13. Procédé selon l'une quelconque des revendications précédentes, dans lequel l'étape d'emballage comprend l'ajout d'un absorbant dans l'emballage.
